# EUROPÄISCHE PATENTANMELDUNG

(11) **EP 1 519 041 A1**
(43) Veröffentlichungstag der Anmeldung: **30.03.2005**
(21) Anmeldenummer: 04022663.1
(22) Anmeldetag: 23.09.2004
(51) Int. Cl.: F03D 11/04

(54) **Durch Verkehr angetriebene Windturbinen**

(30) Priorität: 24.09.2003 DE 10344519
(71) Anmelder: Reinschütz, Peter, 89597 Munderkingen (DE)
(72) Erfinder: Reinschütz, Peter, 89597 Munderkingen (DE)
(74) Vertreter: Patentanwälte Hauck, Graalfs, Wehnert, Döring, Siemons, Schildberg

(57) **Zusammenfassung**

Es werden ein Verfahren und eine Anlage zum Antreiben einer Welle durch Beaufschlagung der Fläche(n) eines mit der Welle gekoppelten Rotationselementes mit der durch die Bewegung einer Vielzahl von Fahrzeugen entlang einer Bahn erzeugten Luftbewegung beschrieben.

## Beschreibung

Die vorliegende Erfindung betrifft ein Verfahren zum Antreiben einer Welle durch Beaufschlagung der Fläche(n) eines mit der Welle gekoppelten Rotationselementes.

Es ist bekannt, Windkräfte zum Antreiben von Wellen und dadurch zum Antreiben von mechanischen Einrichtungen oder Generatoren zur Stromerzeugung zu verwenden. So sind beispielsweise Windräder bereits seit dem Altertum bekannt, mit denen Schöpfeinrichtungen betrieben werden. Neuere Windkraftanlagen werden zur Stromerzeugung eingesetzt. In allen Fällen wird ein Rotationselement, das ein oder mehrere Windangriffsflächen aufweist (Flügel, Schaufeln etc.), durch die auftreffenden Windkräfte in Drehungen versetzt, wodurch eine mit dem Rotationselement gekoppelte Welle gedreht wird, die den nachgeschalteten Mechanismus oder Generator antreibt. Nachteilig ist bei diesen bekannten Windkraftanlagen, daß keine Rotationsenergie zur Verfügung gestellt wird, wenn kein Wind vorhanden ist. Diese Anlagen sind daher windabhängig, was sich insbesondere für die Stromerzeugung als nachteilig erweist, da eine Stromerzeugung nur temporär erfolgen kann.

Der vorliegenden Erfindung liegt die Aufgabe zugrunde, ein weiteres Verfahren zum Antreiben einer Welle zur Verfügung zu stellen, das von vorhandenen Energieresourcen Gebrauch macht, jedoch windunabhängig ist.

Diese Aufgabe wird erfindungsgemäß durch ein Verfahren gelöst, bei dem die Fläche (n) eines mit der Welle gekoppelten Rotationselementes mit der durch die Bewegung einer Vielzahl von Fahrzeugen entlang einer Bahn erzeugten Luftbewegung beaufschlagt werden.

Es ist bekannt, daß sich entlang einer Bahn, beispielsweise einer Schnellstraße, bewegende Fahrzeuge eine Druckwelle erzeugen. Die Luft weicht hierbei nach oben und zur Seite aus, wobei durch eine derartige Druckwelle beachtliche Kräfte erzeugt werden. Der Erfindung liegt nunmehr der Gedanke zugrunde, die durch die Fahrzeugbewegung erzeugte Luftbewegung (Luftdruck bzw. die entsprechende Druckwelle, Luftsog) zur Energieerzeugung zu nutzen. Dies wird dadurch realisiert, daß ein mit einer Welle gekoppeltes Rotationselement hierdurch angetrieben und die damit gekoppelte Welle in Drehungen versetzt wird. Die Rotationsenergie der Welle kann dann beispielsweise zum Direktantrieb von mechanischen Einrichtungen oder zur Stromerzeugung eingesetzt werden.

Es versteht sich, daß bei dem erfindungsgemäßen Verfahren eine weitgehend kontinuierliche Drehung des Rotationselementes angestrebt wird. Die Erfindung nutzt daher die durch die Bewegung einer Vielzahl von Fahrzeugen entlang einer Bahn erzeugte Luftbewegung aus. Bei einer solchen Bahn handelt es sich vorzugsweise um eine Schnellstraße bzw. Autobahn, die aufgrund ihres hohen Verkehrsaufkommens eine weitgehend kontinuierliche Luftbewegung (Druckwelle) infolge der Vielzahl der sich entlang der Bahn bewegenden Kraftfahrzeuge sicherstellt. Die Erfindung schließt jedoch nicht aus, daß auch die von anderen Fahrzeugen erzeugte Luftbewegung, beispielsweise Schienenfahrzeugen mit hoher Zugfolge, zur Beaufschlagung des Rotationselementes genutzt werden.

Es versteht sich ferner, daß bei dem erfindungsgemäßen Verfahren vorzugsweise eine Vielzahl von Rotationselementen durch die durch die Vielzahl von Fahrzeugen erzeugte Luftbewegung beaufschlagt wird, um die Luftdruckenergie bzw. Luftsogenergie weitgehend optimal auszunutzen.

Was die Ausbildung des Rotationselementes anbetrifft, so setzt die Erfindung hierfür keine engen Grenzen. Vorzugsweise wird als Rotationselement ein Flügelelement oder Schaufelrad eingesetzt. Hierfür können beispielsweise Konstruktionen Verwendung finden, wie sie bei bekannten Windkraftanlagen eingesetzt werden. Angesichts der Tatsache, daß sich die Rotationselemente relativ nahe an den sich bewegenden Fahrzeugen befinden müssen, sind diese jedoch vorzugsweise relativ klein ausgebildet, beispielsweise in der Form bekannten Lüfter- oder Kühlventilatoren, so daß keine Behinderung oder Gefährdung des Verkehrs gegeben ist. Solche Rotationselemente aufweisende Anlagen können daher beispielsweise auf dem Mittelstreifen oder auf den Randstreifen von Schnellstraßen, Autobahnen etc. aufgestellt bzw. montiert werden.

Im Normalfall ist jedem Rotationselement eine Welle zugeordnet. Erfindungsgemäß können jedoch auch mehrere Rotationselemente eine einzige Welle antreiben. In einem besonderen Fall treiben zwei Rotationselemente mit entgegengesetzt zueinander angestellten Flächen, die mit Luftdruck aus entgegengesetzten Richtungen beaufschlagt werden, eine einzige Welle an. Eine solche Ausführungsform kann beispielsweise auf dem Mittelstreifen einer Autobahn errichtet werden, wobei die entgegengesetzt gerichteten Druckwellen der Verkehrsströme auf beiden Fahrbahnen ausgenutzt werden.

Die mit dem Rotationselement gekoppelte Welle dient vorzugsweise zum Antreiben eines Generators. Eine Vielzahl von derartigen Anlagen kann zu einem Modul zusammengefaßt werden, in dem Steuerungseinheiten und die notwendigen Elemente zur Einspeisung in das Stromnetz enthalten sind. Die einzelnen Module können miteinander verbunden und in einer Zentrale zusammengeführt werden.

Derartige aus Rotationselement, Welle und Generator bestehende "Windkraftwerke" können daher in einer Vielzahl entlang Schnellstraßen aufgestellt oder an bereits vorhandenen Einrichtungen (Leitplanken etc.) montiert werden. Diese Anlagen sind einfach und kostengünstig ausgebildet und laufen bei bereits relativ geringem Winddruck an. Der Montageaufwand ist relativ gering, da bereits Befestigungselemente und die notwendigen Fundamentierungen weitgehend vorhanden sind. Bei der Anbringung auf dem Mittelstreifen können die Anlagen so ausgestaltet sein, daß sie gleichzeitig als Blendschutz dienen.

Zu Schutzzwecken können die Rotationselemente von einem Gehäuse umgeben sein.

Die Anstellung der Flügel bzw. Schaufeln des Rotationselementes ist vorzugsweise verstellbar, um eine optimale Ausnutzung der durch die Fahrzeuge erzeugten Druckwelle zu erreichen.

In der vorstehenden Beschreibung wurden die Begriffe "Luftdruck" und "Druckwelle" verwendet. Die Verwendung dieser Begriffe schließt nicht aus, daß auch der durch die Bewegung der Fahrzeuge erzeugte Sog zur Beaufschlagung des Rotationselementes genutzt wird. Das erfindungsgemäße Verfahren betrifft daher im weitesten Sinne die Ausnutzung jeglicher, durch die Bewegung eines Fahrzeuges entlang einer Bahn erzeugten Luftbewegung zum Antrieb eines Rotationselementes.

Die Erfindung betrifft ferner eine Anlage zur Durchführung des vorstehend beschriebenen Verfahrens.

Die Erfindung wird nachfolgend anhand eines Ausführungsbeispieles in Verbindung mit der Zeichnung im einzelnen beschrieben. Es zeigen:
- Figur 1: eine schematische Seitenansicht von zwei Windkraftanlagen entlang einer Autobahn mit einem sich auf der Autobahn bewegenden Fahrzeug;
- Figur 2: eine Draufsicht auf die Windkraftanlagen der Figur 1 sowie die Autobahn mit Fahrzeug; und
- Figur 3: eine Draufsicht auf eine auf dem Mittelstreifen einer Autobahn aufgestellte Windkraftanlage.

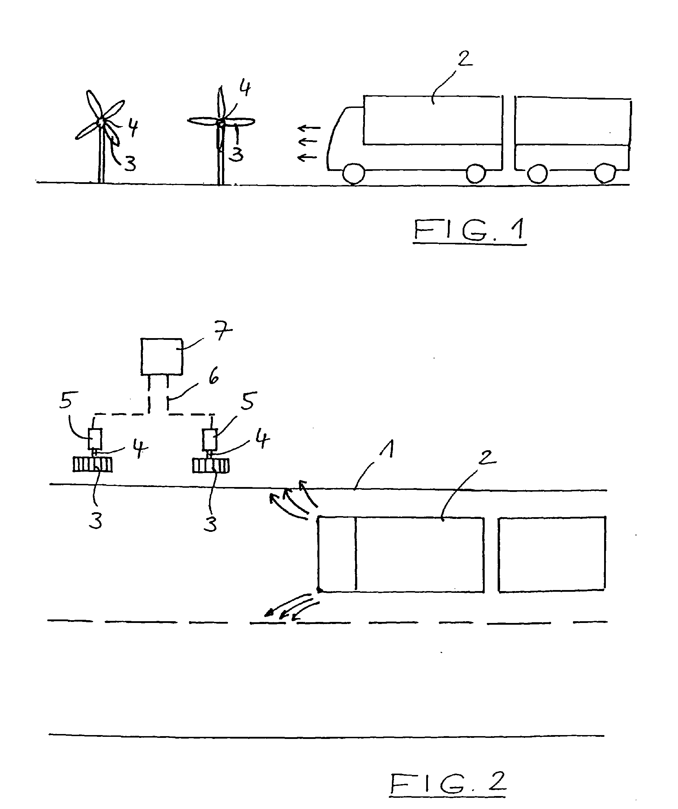

Figur 1 zeigt ein sich auf einer Autobahn bewegendes Kraftfahrzeug 2. Am Seitenstreifen der Autobahn 1 sind zwei Windkraftanlagen aufgestellt, die jeweils ein ventilatorförmiges Rotationselement 3, eine hiermit drehfest verbundene Welle 4 und einen von der Welle 4 angetriebenen Generator 5 umfassen. Der vom Generator erzeugte Strom wird über eine Leitung 6 einer Zentrale 7 zugeführt.

Durch die durch die Bewegung des Kraftfahrzeuges 2 erzeugte Druckwelle werden die Rotationselemente in Drehungen versetzt. Diese Drehung wird durch weitere, sich auf der Autobahn bewegende Fahrzeuge im wesentlichen kontinuierlich aufrechterhalten, so daß die zugehörige Welle 4 permanent gedreht wird. Hierdurch wird im Generator 5 Strom erzeugt, der an die Zentrale 7 weitergegeben und von dort beispielsweise in ein bestehendes Netz eingespeist werden kann. Die Windkraftanlagen sind in optimierten Abständen entlang den Seitenstreifen der Autobahn aufgestellt.

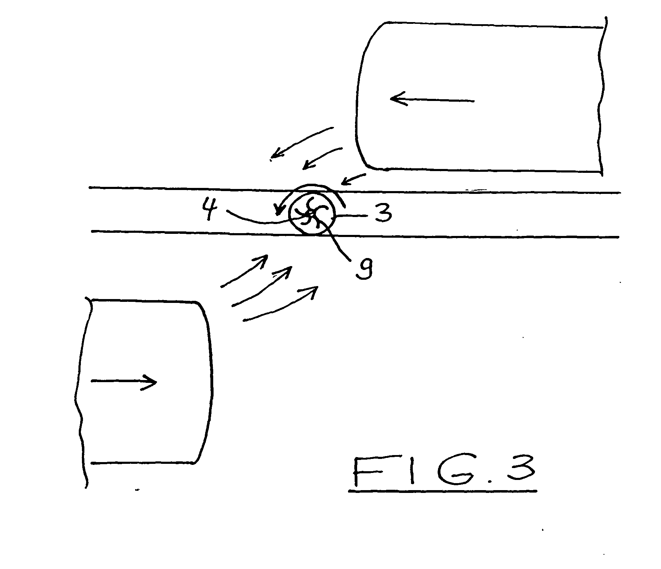

Figur 3 zeigt eine Draufsicht auf eine auf dem Mittelstreifen einer Autobahn aufgestellte Windkraftanlage. Bei dieser Ausführungsform ist die Windkraftanlage zylinderförmig ausgebildet und besitzt ein Rotationselement 3, das eine Welle 4 und eine Vielzahl von an der Welle befestigten Schaufeln 9 aufweist. Die Welle 4 ist hierbei senkrecht angeordnet. Die zugehörigen Einrichtungen zur Übertragung der Rotationsenergie der Welle 4 auf einen Generator und der Generator selbst sind nicht dargestellt.

Man erkennt, daß die Schaufeln 9 so angeordnet und ausgebildet sind, daß das Rotationselement von den Druckwellen der sich in entgegengesetzten Richtungen bewegenden Fahrzeuge angetrieben und in einer Richtung gedreht wird.

Durch die Vielzahl der Windkraftanlagen bzw. Windräder entlang der Autobahn kann auch bei schwachem Verkehr ein kontinuierlicher elektrischer Strom erzeugt werden, da ein Fahrzeug nacheinander immer eine bestimmte Anzahl von Windrädern in Drehung versetzt. Ein einziges Fahrzeug setzt daher nacheinander die Rotationselemente von aufeinanderfolgenden Windrädern in Drehung, wobei durch Kopplung dieser Windräder und geeignete schaltungstechnische Maßnahmen ein konstanter elektrischer Strom erzeugt werden kann.

Es versteht sich von selbst, daß die Windräder in bezug auf die erzeugte Luftbewegung (Druck oder Sog) optimal ausgerichtet sind.

## Patentansprüche

1. Verfahren zum Antreiben einer Welle durch Beaufschlagung der Fläche(n) eines mit der Welle gekoppelten Rotationselementes mit der durch die Bewegung einer Vielzahl von Fahrzeugen entlang einer Bahn erzeugten Luftbewegung.

2. Verfahren nach Anspruch 1, **dadurch gekennzeichnet, daß** als Luftbewegung der von den Fahrzeugen erzeugte Luftdruck genutzt wird.

3. Verfahren nach Anspruch 1, **dadurch gekennzeichnet, daß** als Luftbewegung der von den Fahrzeugen erzeugte Luftsog genutzt wird.

4. Verfahren nach einem der vorangehenden Ansprüche, **dadurch gekennzeichnet, daß** als Rotationselement ein Flügelelement verwendet wird.

5. Verfahren nach einem der Ansprüche 1 - 3, **dadurch gekennzeichnet, daß** als Rotationselement ein Schaufelrad verwendet wird.

6. Verfahren nach einem der vorangehenden Ansprüche, **dadurch gekennzeichnet, daß** die mit dem Rotationselement gekoppelte Welle zum Antreiben eines Generators dient.

7. Verfahren nach einem der vorangehenden Ansprüche durch Verwendung einer Vielzahl von entlang Schnellstraßen angeordneten Rotationselementen.

8. Verfahren nach einem der vorangehenden Ansprüche, **dadurch gekennzeichnet, daß** Rotationselemente verwendet werden, die in der Form von Lüfter- oder Kühlventilatoren ausgebildet sind.

9. Verfahren nach einem der vorangehenden Ansprüche, **dadurch gekennzeichnet, daß** mehrere Rotationselemente eine Welle antreiben.

10. Verfahren nach Anspruch 9, **dadurch gekennzeichnet, daß** zwei Rotationselemente mit entgegengesetzt zueinander angestellten Flächen, die mit Luftdruck aus entgegengesetzten Richtungen beaufschlagt werden, eine einzige Welle antreiben.

11. Anlage zur Durchführung des Verfahrens nach einem der vorangehenden Ansprüche.

12. Anlage nach Anspruch 11, **dadurch gekennzeichnet, daß** das Rotationselement (3) in einem Gehäuse angeordnet ist.
